# EUROPÄISCHE PATENTANMELDUNG

(11) **EP 3 418 322 A1**
(43) Veröffentlichungstag der Anmeldung: **26.12.2018**
(21) Anmeldenummer: 17177153.8
(22) Anmeldetag: 21.06.2017
(51) Int. Cl.: C08J 5/04, C08J 5/24

(54) **FLÄCHIGES HALBFERTIGPRODUKT MIT EINER KUNSTSTOFFMATRIX**

(71) Anmelder: Nolax AG, 6203 Sempach Station (CH)
(72) Erfinder: Wolf, Thomas, 6025 Neudorf (CH); Hosotte, Claude, 68220 Michelbach le Haut (FR); Frei, Philipp, 6212 Kaltbach/LU (CH); Schaller, Raphael, 8004 Zürich (CH); Bruderer, Beat, 8055 Zürich (CH)
(74) Vertreter: Hepp Wenger Ryffel AG

(57) **Zusammenfassung**

Die Erfindung betrifft ein flächiges Halbfertigprodukt aufweisend eine Matrix mit wenigstens einer latent reaktiven Kunststoffzusammensetzung, welche zu einem thermoplastischem Elastomer aushärtbar ist und in der Matrix eingebetteten Fasern. Die Erfindung betrifft auch ein Verfahren zum Herstellung flächiger Halbfertigprodukte.

## Beschreibung

Die Erfindung betrifft ein flächiges Halbfertigprodukt, ein Verfahren zum Herstellen von flächigen Halbfertigprodukten sowie die Verwendung eines flächigen Halbfertigproduktes gemäss den Oberbegriffen der unabhängigen Ansprüche.

Faserverstärkte Kunststoffe gewinnen für die Herstellung struktureller Bauteile zunehmend an Bedeutung. Solche Bauteile eignen sich insbesondere zum Einsatz im Motorsport-, Raumfahrt-, Schienenfahrzeug- und Flugzeugbau. Beispielsweise weisen diese Bauteile bei gleicher Leistungsfähigkeit ein geringeres Gewicht als konventionelle Bauteile aus Stahl, Aluminium oder Holz auf, was zu Einsparungen bei Energie - und Kraftstoffverbrauch führt.

Faserverstärkte Kunststoffe lassen sich beispielsweise durch Einbettung von Fasern in eine Kunststoffmatrix und anschliessenden Aushärten erzielen. Als Kunststoffmatrix dominieren dabei duromere Harzsysteme. Alternativ können die Fasern und das Harz mit geeigneten Härtern kombiniert werden und in einem ungehärteten Zustand gelagert werden. Die Vernetzung zu einem faserverstärkten Kunststoff erfolgt dann erst zu einem späteren Zeitpunkt. Typischerweise werden als Harze Epoxidharze eingesetzt. Diese sind jedoch aufgrund der Anwesenheit von Härtern und Beschleunigern in der Harzmatrix nur eine begrenzte Zeit lagerstabil. Um eine vorzeitige Vernetzung zu vermeiden werden solche reaktiven Systeme bei tiefen Temperaturen (ca. -20°C) gelagert und müssen vor der Weiterverarbeitung angetaut werden.

WO 2015/097097 A1 beschreibt ein lagerstabiles Prepreg auf Basis eines Epoxidharzes, das mit einem Vernetzungsmittel zu einem Duromer aushärtet. Die Lagerstabilität wird dabei durch eine räumliche Trennung von Reaktivharz und Vernetzungsmittel nach der Trocknung erzielt. Die Durchmischung der Komponenten kann dann durch Temperaturerhöhung erfolgen, bei der alle Komponenten geschmolzen vorliegen. Diese latent reaktiven Epoxidharze verursachen jedoch bei der Verarbeitung der Prepregs verhältnismässig lange Presszeiten bei verhältnismässig hohen Temperaturen. Längere Presszeiten und höhere Prozesstemperaturen hätten auch Einfluss auf die verwendbaren Fasertypen. Tiefschmelzende Faserarten, wie beispielsweise Polyamid, Polyethylen oder Polyester, sind nicht verwendbar. Zudem ist lediglich die Aushärtung zu Duromeren möglich. Duromere haben jedoch den Nachteil, dass sie bei hoher und instantaner mechanischer Einwirkung zu Sprüngen und Rissen im Material führen und damit zu einer Schwächung des Materials.

Es ist daher eine Aufgabe der Erfindung die Nachteile des Stands der Technik zu überwinden. Insbesondere ist es eine Aufgabe der Erfindung ein flächiges Halbfertigprodukt bereitzustellen, das verkürzt Prozesszeiten zur Aushärtung aufweist sowie nach dem Aushärten widerstandsfähig gegenüber hoher und instantaner mechanischer Einwirkung ist. Es ist auch Aufgabe der Erfindung ein Verfahren zur Herstellung eines solchen flächigen Halbfertigproduktes sowie eine Verwendung eines solchen Produktes bereitzustellen.

Diese Aufgabe wird durch die in den unabhängigen Patentansprüchen definierte Vorrichtung, Verfahren und Verwendung gelöst. Weitere Ausführungsformen ergeben sich aus den abhängigen Patentansprüchen.

Die Erfindung betrifft ein flächiges Halbfertigprodukt aufweisend
- eine Matrix mit wenigstens einer latent reaktiven Kunststoffzusammensetzung, welche zu einem thermoplastischem Elastomer aushärtbar ist;
- in der Matrix eingebetteten Fasern.

Unter "Einbetten" ist dabei eine makroskopische Ansicht zu verstehen, d.h. eine äussere Ansicht. Unter "Einbetten" ist insbesondere imprägnieren zu verstehen. Die Fasern sind von der Matrix umhüllt. Das Umhüllen kann beispielsweise durch Besprühen mit der Matrix oder durch Durchziehen der Fasern durch eine Matrixlösung erfolgen.

Das erfindungsgemässe Halbfertigprodukt hat den Vorteil, dass die Fasern vollständig imprägniert, d.h. von der Kunststoffmatrix umgeben, sind. Vor der Weiterverarbeitung (d.h. Formgebung und Aushärtung) kann das Halbfertigprodukt bei Raumtemperatur über einen langen Zeitraum gelagert werden kann.

Das erfindungsgemässe Halbfertigprodukt zeichnet sich weiterhin dadurch aus, dass es sich zur Herstellung von Faserverbund-Bauteil mit einer hohen Widerstandsfähigkeit gegenüber mechanischer Einwirkung eignet.

Die Fasern können auf Eiweiss, Cellulose, synthetischen Polymeren oder anorganischen Substanzen basieren.

Auf Eiweiss basierende Fasern können ausgewählt sein aus der Gruppe: Wolle, Seide, Angora, Kaschmir, Kasein, Kollagen, Ardein und Zein.

Cellulosefasern können Baumwolle und Bastfasern wie Baumwolle, Leinen, Hanf oder Jute sein. Cellulosefasern können auch holzbasiert sein wie beispielsweise Viscose, Modal, Lyocell, Cupro, Acetat.

Fasern aus synthetischen Polymeren können ausgewählt sein aus der Gruppe: Polyethylen, Polyester; Aramid, insbesondere Polyamid; Polypropylen; Polyurethan (Elastan); Acryl; Polytetrafluorethylen; Polyphenylen-2,6-benzobisoxazol; Flüssigkristallpolymere (LCP), insbesondere Poly (*p*-hydroxybenzoesäure-*co*-hydroxy-6-naphthoesäure.

Die Gruppe der Fasern aus anorganischen Substanzen umfassen Carbon, Keramik, Glas, Quarz, Metall.

Die Fasern können als einzelne Fasern in die Matrix eingebettet werden oder aber vorher zu einem Faden versponnen worden sein und als Faden eingebettet werden. Ebenso können die Fasern zu Fäden und dann zu einem Gewebe verarbeitet worden sein, wobei das Gewebe eingebettet wird. Es lassen sich auch Filamente einbetten. Wobei unter Filamente künstliche, beliebig lange Fasern zu verstehen sind. Ebenso ist es denkbar, dass eine Kombination aus unterschiedlichen Fasern eingebettet wird.

Die Möglichkeit verschiedene Faserarten zu verwenden hat den Vorteil, dass sich ein breites Anwendungsfeld erschliesst. Die Eigenschaften des Produktes können an den geplanten Verwendungszweck optimal angepasst werden.

Die Kunststoffzusammensetzung kann ein Polyurethan und ein latent reaktives Isocyanat aufweisen. Das Isocyanat ist vorzugsweise verkapselt oder oberflächendesaktivert. Die Mengenverhältnisse zwischen Polyurethan und Isocyanat können variieren. Beispielsweise folgende Zusammensetzungen sind denkbar: Bei 100 Gewichtsteilen (pbw = parts by weight) Polyurethan können 5 bis 10 pbw Toluol-2,4-diisocyanat Dimer (TDI Dimer) hinzugegeben werden. Es ist auch möglich zu 100 pbw Polyurethan 15 pbw Isophoron-Diisocyanat-Trimer (IPDI Trimer) dazuzugeben, um eine Vergilbung des Materials zu verhindern.

Durch das latent reaktive Isocyanat erfolgt bei Raumtemperaturkeine Reaktion zwischen dem Isocyanat und den freien OH-Gruppen des Polyurethans. Das flächige Halbfertigprodukt kann bei Raumtemperatur über einen langen Zeitraum ohne Aufwand gelagert werden. Der Reaktionsprozess kann durch kurzes Anstossen der Reaktionen bei tiefen Temperaturen (<120°C) erfolgen. Der Formgebungsvorgang (z.B. Pressen, Vakuumsackverfahren oder im Autoklav) kann dennoch kurz gehalten werden. Es können kurze Zykluszeiten verwendet werden, was einen positiven Einfluss auf die verwendbaren Fasern hat. Es ist somit auch der Einsatz von tiefschmelzenden Faserarten möglich, beispielsweise Polyamid, Polyethylen oder Polyester.

Die Kunststoffzusammensetzung liegt vorzugsweise als wässrige Dispersion vor. Die Kunststoffzusammensetzung kann auch als Pulver oder Schmelze vorliegen. Die Auftragung der Dispersion kann beispielsweise durch Sprühen, Aufrakeln, Tränken, Infusion und/oder Vakuuminfusion erfolgen. Die Fasern können aber auch durch die Dispersionslösung hindurchgezogen und dabei gespreizt werden.

Die Dispersion fördert die Faserspreizung. Dadurch kann der Benetzungsgrad erhöht werden, was zu einer optimalen Fasereinbindung und hohem Faseranteil in der Matrix führt.

Die Kunststoffzusammensetzung ist im Wesentlichen frei von VOC (volatile organic compounds). Das erhöht den Arbeitsschutz beim Umgang mit der Kunststoffzusammensetzung.

Es hat sich überraschend gezeigt, dass sich aus gespreizten und mit der latent reaktiven Kunststoffzusammensetzung imprägnierte Fasern mittels des Vakuumsackverfahrens eine stoffähnliche Haptik erzielen lässt.

Das Halbfertigproduktes bzw. des Endproduktes nach dem Aushärten, d.h. das Faserverbund-Bauteil, können durch den Zusatz weiterer funktioneller Additive, z.B. Flammschutzmittel, Mittel mit antimikrobieller Wirkung, Haftvermittler z.B. zur Erhöhung der Affinität zu Metallen, Fluoreszenz-Mittel oder UV-Schutz-Mittel, weiter Eigenschaften aufweisen.

Die Fasern sind vorzugsweise im Wesentlichen in einer Längsausdehnung zu einer Hauptfläche des Halbfertigproduktes angeordnet.

Unidirektionale Halbfertigprodukte haben den Vorteil, dass sie gezielt entlang dem Kraftverlauf aufgeschichtet werden können. Nach der Weiterverarbeitung (Pressen, Aushärten) kann somit ein robustes und widerstandfähiges Faserverbund-Bauteil erhalten werden.

Die Fasern des flächigen Halbfertigprodukts sind vorzugswiese gespreizt.

Gespreizte Fasern können besser benetzt werden, die Fasereinbindung und damit der Faseranteil werden erhöht. Ein höherer Faseranteil erhöht die Leistungsfähigkeit des Faserverbund-Bauteils.

Die Faserspreizung ermöglicht zudem die Verwendung unterschiedlicher Faserarten in einem Halbfertigprodukt. Auch der Einsatz unterschiedlicher Kunststoffzusammensetzungen in einem Halbfertigprodukt ist denkbar. Dadurch können im Material verschiedene Eigenschaften kombiniert werden.

Ein weiterer Aspekt der Erfindung betrifft ein Verfahren zur Herstellung von flächigen Halbfertigprodukten aufweisend eine Matrix, insbesondere wie vorhergehend beschrieben. Das Verfahren umfasst den Schritt des Einbettens von Fasern in eine Matrix. Die Matrix weist wenigstens eine latent reaktive Kunststoffzusammensetzung auf, welche zu einem thermoplastischen Elastomer aushärtbar ist.

Das auf diese Weise hergestellte Halbfertigprodukt ist bei Raumtemperatur über einen langen Zeitraum lagerbar.

Die latent reaktive Kunststoffzusammensetzung kann bei Temperaturen im Bereich von 60 bis 140 °C, bevorzugt 100 bis 120 °C, ausgehärtet werden.

Die Aushärtung kann nach einer Formgebung erfolgen. Dazu wird das Halbfertigprodukt optional zugeschnitten und in ein Formwerkzeug eingebracht, beispielsweise eine Presse. Während des Formgebungsvorgangs kann gleichzeitig die Aushärtung erfolgen.

Die Reaktivierungstemperaturen sind im Vergleich zu herkömmlichen Verfahren niedrig und ermöglichen somit auch den Einsatz tiefschmelzender Faserarten.

Im Anschluss kann das Faserverbund-Bauteil aus dem Formwerkzeug entnommen werden und falls nötig nachbearbeitet werden.

Die Fasern können auf Eiweiss, Cellulose, synthetischen Polymeren oder anorganischen Substanzen, wie bereits vorhergehend ausführlich beschrieben, basieren. Auch eine Kombination von verschiedenen Fasern in einem Halbfertigprodukt ist denkbar.

Durch die Wahl der Fasern lassen sich die Eigenschaften des Halbfertigproduktes als auch des Faserverbund-Bauteils steuern.

Die Kunststoffzusammensetzung weist vorzugsweise Polyurethan und ein latent reaktives Isocyanat auf. Das Isocyanat kann verkapselt oder oberflächendesaktivert sein.

Latent reaktive Isocyanate bleiben bei Raumtemperatur über einen langen Zeitraum unreaktiv. Dadurch lassen sich entsprechend hergestellte Halbfertigprodukte über Monate und ohne Aufwand vor der Weiterverarbeitung lagern. Die Reaktivierung kann im Vergleich zu herkömmlichen Verfahren bei niedrigeren Temperaturen erfolgen. Prozesszeiten und Energieeintrag können verringert werden.

Beim Aushärten resultiert aus einer derartigen Kunststoffzusammensetzung ein thermoplastisches Elastomer mit weichen und harten Segmenten. Das resultierende Faserverbund-Bauteil zeigt hohe Endeigenschaften, beispielsweise in Kohäsion, Zugfestigkeit, Zähigkeit, Ermüdung, Alterung. Das Bauteil ist im Vergleich zu anderen Faserverbunden im Wesentlichen spannungsfrei.

Die Kunststoffzusammensetzung ist vorzugsweise eine wässrige Dispersion. Aber auch Pulver und Schmelzen sind möglich.

Die Dispersion ermöglicht eine vollständige Imprägnierung der Fasern. Die Trocknung des Halbfertigprodukts vor der Lagerung setzt im Wesentlichen keine umweltbelastenden Lösungsmittel frei.

Die Fasern werden in Längsausdehnung zu einer Hauptfläche des Halbfertigproduktes angeordnet.

Unidirektionale Halbfertigprodukte lassen sich entlang des Kraftverlaufs schichten, dadurch können hohe mechanische Eigenschaften erzielt werden.

Die Fasern werden vorzugsweise gespreizt. Die Spreizung erfolgt insbesondere während des Einbettens.

Es ist möglich unterschiedliche Fasern nebeneinander zu spreizen und somit die Eigenschaften der unterschiedlichen Fasern in einem Halbfertigprodukt zu kombinieren. Dies erhöht zusätzlich die Zugänglichkeit zu verschiedenen Faserverbundwerkstoffen.

Durch das Spreizen wird ausserdem ein erhöhter Benetzungsgrad der Fasern erreicht. Die Fasereinbindung wird optimiert. Es ist auch möglich, das einzelne Fasern mit unterschiedlichen Kunststoffzusammensetzungen umhüllt werden. Damit lassen sich weitere Eigenschaften im Halbfertigprodukt kombinieren.

Grundsätzlich lassen sich mit dem beschriebenen Verfahren zwischen 1 und 50 µm, bevorzugt zwischen 8 und 30 µm und ganz besonders bevorzugt zwischen 15 und 25 µm dicke, unidirektionale Halbfertigprodukte herstellen. Die unidirektionale Halbfertigprodukte können ein Faservolumenanteil zwischen 1 und 99%, bevorzugt zwischen 40 und 80 % und ganz besonders bevorzugt zwischen 55 und 65 % aufweisen.

Ein weiterer Aspekt der Erfindung betrifft ein flächiges Halbfertigprodukt, insbesondere ein herstellbares oder hergestelltes wie oben beschrieben.

Das flächige Halbfertigprodukt kann aus gleichen Fasern eingebettet in einer Kunststoffmatrix, unterschiedlichen Fasern eingebettet in einer Kunststoffmatrix, gleiche Fasern eingebettet in unterschiedliche Kunststoffmatrizen oder unterschiedliche Fasern eingebettet in unterschiedliche Kunststoffmatrizen bestehen.

Das Halbfertigprodukt kann entsprechend seiner Verwendung in den Eigenschaften angepasst werden. Solche Halbfertigprodukte eignen sich zur Erzeugung verschiedenster Faserverbund-Bauteile. Die Bauteile zeichnen sich durch hohe Widerstandsfähigkeit und Langlebigkeit aus.

Ein weiterer Aspekt der Erfindung betrifft die Verwendung eines flächigen Halbfertigproduktes wie vorhergehend beschrieben für die Herstellung von Schutzausrüstung, Fahrzeugbauteile, Sport- und Freizeitartikel, Werkzeuge, Koffer, Maschinenbauteile, Kleidung und Schmuck.

Unter Schutzausrüstung kann beispielsweise die Ausrüstung gegen Hitze von Einsatzkräften wie Feuerwehr verstanden werden oder auch Militärkleidung und Militärausrüstung.

Die erfindungsgemässen Halbfertigprodukte eignen sich für Fahrzeugbauteil in Luft- und Raumfahrt sowie Automobilbau, Schienenfahrzeuge oder Schiffe. Beispielsweise können die Halbfertigprodukte für die Herstellung von Reifen, Schläuchen, Bekleidung und Karosserieteile genutzt werden oder als Fahrzeugpanzerung. Die flächigen Halbfertigprodukte mit der Kunststoffmatrix können beispielsweise zu Textilien wie Segel weiterverwendet werden.

Sport- und Freizeitartikel umfassen beispielsweise Helme, Tennisschläger, Sicherungsschlaufen, Schlaufen für Kletterkarabiner, Eishockeystöcke, Skier, Skischuhe, Fahrradrahmen, Zelte, Stand-UP-Paddel, Boards.

Weiter denkbar sind Werkzeuggriffe, Schleifbänder, Transport- und Antriebsbänder, Zugelemente am Kran, Seile, Reisekoffer, Taschen, Schmuck aus beispielsweise mehrlagigem Verbund aus Gold-Carbonfaser, Uhren, Schuhe.

### BEISPIEL

Im nachfolgenden wird exemplarisch eine Ausführungsform der Erfindung näher erläutert.

### Zusammensetzung der Dispersion:

Dispercoll® U XP 2702 (von Covestro AG) ist eine wässrige, anionische Dispersion aus aliphatischem Polyurethan. Mit Kombination einer wässerigen Suspension eines deaktivierten Feststoff-Isocyanat, Desmodur® LP BUEJ 471, ein IPDI Trimer (von Covestro AG), entsteht ein latent reaktives System mit einem Gehalt von Polyurethan und Isocyanat von etwa 60% und Wasser etwa 40% ein.

### Faserspreizung zum flächigen Halbfertigprodukt:

Mit Hilfe dieser Dispersion werden die Hochleistungsfasern gespreizt und ebenso imprägniert, so dass nach dem Trocknen bei 45 °C unidirektionale Hochleistungsbänder entstehen. Das Matrixmaterial, mit dem die Fasern eingebettet werden, ist zu diesem Zeitpunkt immer noch latent reaktiv. Hochfeste und hochsteife Polyethylen Fasern, wie Dyneema SK75 1760 dtex, werden bei 5 m/min gespreizt und imprägniert. Eine Lage von diesem flächigen Halbfertigprodukt besitzt nach dem Trocknen eine Massenbelegung von etwa 12 g/m² mit einem Faservolumenanteil von 65% und einem Matrixvolumenanteil von 35%.

### Laminierung zum Textil:

Diese Halbfertigprodukte können zum Beispiel zu 4-lagigen Laminate abgelegt werden. Der Schichtaufbau ist vorzugsweise symmetrisch mit Faserorientierung 90°/0°/0°/90° (ein sogenannter Kreuzverbund = cross ply). In einem Vakuumbeutel werden diese Laminate bei 100 mbar und 110 °C für 10 min zu einem Verbund konsolidiert. Bei diesem Prozess wird die Matrix zum Aushärten aktiviert. Dieses Textil zeigt eine Massenbelegung von etwa 45 g/m².

### Prüfungen:

Gängige Prüfungen für diese Art von Textilien sind:
(1) Weiterreisprüfung (ein sogenannter «Hosen-Test») in Anlehnung an DIN EN ISO 13937-2 und (2) T-Schälprüfung in Anlehnung an DIN EN ISO 11339.

### (1) Weiterreisprüfung:

Prüfkörper von 150 mm auf 50 mm werden längs entlang der Mittellinie auf einen Weg von 75 mm eingeschnitten. In einer Universalprüfmaschine werden diese Prüfkörper mit einer Prüfgeschwindigkeit von 10 mm/min weiter auseinandergezogen. Das oben beschriebene Textil versagt in Delamination bei einer maximalen Kraft von 100 (+/- 10) N (Losgrösse = 3).

### (2) T-Schälprüfung:

Prüfkörper von etwa 150 mm Länge und 20 mm Breite werden zugeschnitten. Der Initialriss befindet sich zwischen den beiden Lagen mit 0°-Faserorientierung. In einer Universalprüfmaschine werden diese Prüfkörper mit einer Prüfgeschwindigkeit von 50 mm/min weiter auseinandergeschält. Das oben beschriebene Textil zeigte T-Schälwerte von 610 (+/- 50) N (Losgrösse = 5).

## Patentansprüche

1. Flächiges Halbfertigprodukt aufweisend
- eine Matrix mit wenigstens einer latent reaktiven Kunststoffzusammensetzung, welche zu einem thermoplastischem Elastomer aushärtbar ist;
- in der Matrix eingebetteten Fasern.

2. Flächiges Halbfertigprodukt nach Anspruch 1, wobei die Fasern auf Eiweiss, Cellulose, synthetischen Polymeren oder anorganischen Substanzen basieren.

3. Flächiges Halbfertigprodukt nach Anspruch 1 oder 2, wobei die Kunststoffzusammensetzung Polyurethan und ein latent reaktives, insbesondere verkapseltes oder oberflächendesaktivertes, Isocyanat aufweist.

4. Flächiges Halbfertigprodukt nach einem der Ansprüche 1 bis 3, wobei die Kunststoffzusammensetzung eine wässrige Dispersion ist.

5. Flächiges Halbfertigprodukt nach einem der Ansprüche 1 bis 4, wobei die Fasern im Wesentlichen in einer Längsausdehnung zu einer Hauptfläche des Films angeordnet sind.

6. Flächiges Halbfertigprodukt nach einem der Ansprüche 1 bis 5, wobei die Fasern gespreizt sind.

7. Verfahren zur Herstellung von flächigen Halbfertigprodukten aufweisend eine Matrix, insbesondere gemäss einem der Ansprüche 1 bis 6, umfassend den Schritt
- des Einbettens von Fasern in eine Matrix aufweisend wenigstens eine latent reaktiven Kunststoffzusammensetzung, welche zu einem thermoplastischem Elastomer aushärtbar ist.

8. Verfahren nach Anspruch 7, wobei die latent reaktive Kunststoffzusammensetzung bei Temperaturen im Bereich von 60 bis 140 °C, bevorzugt 100 bis 120 °C, ausgehärtet wird.

9. Verfahren nach Anspruch 7 oder 8, wobei die Fasern auf Eiweiss, Cellulose, synthetischen Polymeren oder anorganischen Substanzen basieren.

10. Verfahren nach einem der Ansprüche 7 bis 9, wobei die Kunststoffzusammensetzung Polyurethan und ein latent reaktives, insbesondere verkapseltes oder oberflächendesaktivertes, Isocyanat aufweist.

11. Verfahren nach einem der Ansprüche 7 bis 10, wobei die Kunststoffzusammensetzung eine wässrige Dispersion ist.

12. Verfahren nach einem der Ansprüche 7 bis 11, wobei die Fasern in Längsausdehnung zu einer Hauptfläche des flächigen Halbfertigproduktes angeordnet werden.

13. Verfahren nach einem der Ansprüche 7 bis 12, wobei die Fasern, insbesondere während dem Einbetten, gespreizt werden.

14. Flächiges Halbfertigprodukt, insbesondere nach einem der Ansprüche 1 bis 6, herstellbar oder hergestellt nach einem Verfahren gemäss einem der Ansprüche 7 bis 13.

15. Verwendung eines flächigen Halbfertigprodukt nach einem der Ansprüche 1 bis 6 oder 14 für die Herstellung von Kleidung, Fahrzeugbauteile, Sport- und Freizeitartikel, Werkzeuge, Koffer, Maschinenbauteile, Gebäudemembran, Schmuck, Antriebs- und Transportbänder.
